# EUROPÄISCHE PATENTSCHRIFT

(11) **EP 1 910 193 B1**
(45) Veröffentlichungstag und Bekanntmachung des Hinweises auf die Patenterteilung: **21.04.2010**
(21) Anmeldenummer: 06778149.2
(22) Anmeldetag: 03.08.2006
(51) Int. Cl.: B65G 1/137

(54) **VORRICHTUNG ZUR BERÜHRUNGSLOSEN FÜLLSTANDSDETEKTION EINER KOMMISSIONIERANLAGE**
DEVICE FOR THE CONTACTLESS DETECTION OF THE FILLING LEVEL OF A COMMISSIONING INSTALLATION
DISPOSITIF POUR REALISER UNE DETECTION SANS FIL DU NIVEAU DE REMPLISSAGE D'UNE INSTALLATION DE PREPARATION DE COMMANDE

(30) Priorität: 03.08.2005 DE 102005036434
(43) Veröffentlichungstag der Anmeldung: 16.04.2008
(73) Patentinhaber: SSI Schäfer Peem GmbH, 8051 Graz-Gösting (AT)
(72) Erfinder: SCHÄFER, Gerhard, DE Neunkirchen (DE)
(74) Vertreter: Wegener, Markus
(86) Internationale Anmeldenummer: PCT/EP2006/065017
(87) Internationale Veröffentlichungsnummer: WO 2007/014963

(56) Entgegenhaltungen:
- WO-A-2005/087625
- AT-U1- 8 612
- GB-A- 2 118 156

## Beschreibung

Die Erfindung bezieht sich auf eine Vorrichtung mit einem Distanzmessgerät (3) zur berührungslosen Füllstandsdetektion von mit Entnahmeeinheiten versehenen Automatenschächten einer Kommissionieranlage, wobei die Entnahmeeinheiten Stückgut an eine oder mehrere Fördereinheiten abgeben , gemäß dem Oberbegriff des Anspruchs 1 sowie ein entsprechendes Verfahren zur berührungslosen Füllstandsdetektion bei Kommissionieranlagen. Eine derartige Vorrichtung ist aus der GB 2 118 156 A bekannt.

Derartige Automatenschächte kommen bei Kommissionieranlagen in unterschiedlichsten Adaptierungen zum Einsatz, um eine oder mehrere Fördereinheiten über im unteren Endbereich der Automatenschächte angeordnete Entnahmeeinheiten mit Stückgut zu beschicken. Beim Stückgut kann es sich um Waren aller Art in zumeist regelmäßigen Verpackungen handeln. Das Einsatzgebiet von derartigen Kommissionieranlagen liegt vorwiegend im Bereich des Pharmahandels, von Kosmetik-, Tabak- und Lebensmittelfirmen, der Audio- und Videoproduktverteilung und anderen Verteilzentren. Zumeist werden nach Art und Anzahl festgelegte Stückgutchargen von den Fördereinheiten zu Transportbehältern weiterbefördert, von wo aus der Versand oder die Einlagerung in einem Depot erfolgt.

### STAND DER TECHNIK

Die Automatenschächte sind dabei in der Regel in einer Reihe nebeneinander angeordnet, wobei jeweils zwei Automatenschachtreihen eine Einheit bilden. Unter anderem sind auch A-förmig angeordnete Automatenschachtreihen bekannt sowie V-förmig angeordnete Automatenschachtreihen.

Um die auftragsgemäßen Stückgutchargen in korrekter Zusammenstellung auf die Fördereinheit zu kommissionieren und Verzögerungen aufgrund leerer Automatenschächte zu verhindern, ist eine zuverlässliche Überwachung der Füllstände des jeweiligen Stückgutes in den Automatenschächten erforderlich. Eine unbemerkte Entleerung eines Automatenschachtes kann dabei zu vielerlei Komplikationen in der Qualitätssicherung führen und verursacht einen erhöhten Aufwand bei Versand, Lagerhaltung und Reklamation. Besonders im pharmazeutischen Bereich ist das Fehlen eines vorgesehen. Wirkpräparates in einer Medikamentenzusammenstellung vollkommen unerwünscht.

Selbige Füllstandskontrolle kann auch zur permanenten Bestandsüberwachung bzw. Inventur einer Kommissionieranlage herangezogen werden.

Üblicherweise verfügen Automatenschächte an Kommissionieranlagen nach dem Stand der Technik über eine Detektion der Entleerung eines Automatenschachtes und veranlassen in solchem Falle eine Meldung über den "Leer-Status". Da aufgrund der geschilderten Komplikationen ein Ausfall in der Stückgutbeschickung während des Kommissionierprozesses tunlichst vermieden werden muss, ist eine intensive visuelle Kontrolle der Automatenschacht-Füllstände notwendig und macht die permanente Überwachung der Kommissionieranlage durch entsprechendes Personal erforderlich.

Es ist also ein Nachteil von derartigen Vorrichtungen, dass ein sich anbahnender Mangel an Stückgut in einem Automatenschacht oftmals nicht rechtzeitig und zuverlässig registriert wird, sodass Maßnahmen zu einem Auffüllen des Automatenschachtes nur verspätet getroffen werden können und eine Anzahl von über die Fördereinheit bereits in Richtung Versand weiterbeförderten Stückgutchargen hierdurch ein Defizit an bestimmten Waren aufweisen.

Aus der WO 2005/087625 A1 (Dieses Dokument fällt unter Artikel 5413) des Europäischen Patentübereinkommens) ist deshalb eine Vorrichtung zur berührungslosen Füllstandsdetektion von mit Entnahmeeinheiten versehenen, schräg zu einer Fördereinheit geneigten A-förmig angeordneten Automatenschachtreihen bekannt, wobei ein Verstellwagen samt Distanzmessgeräten vorgesehen ist, welcher an unterschiedlichen Automatenschächten zugeordneten Messpositionen entlang einer Führungsbahn verfahrbar ist. Um eine Detektion des Füllstandes beider Automatenschachtreihen zu ermöglich sind jedoch bei dieser Vorrichtung zumindest zwei Distanzmessgeräte erforderlich, eines für jede Reihe der Automatenschächte.

Der vorliegenden Erfindung liegt daher die Aufgabe zugrunde, diese Nachteile zu vermeiden, und eine Vorrichtung und ein Verfahren zur berührungslosen Füllstandsdetektion von Automatenschächten bei Kommissionieranlagen zu schaffen, durch welche eine optimale Kontrolle der Füllstände aller an der Kommissionieranlage angeordneten und im Einsatz befindlichen Automatenschächte gewährleistet wird, wobei dem Anlagenbenutzer eine sich anbahnende Entleerung eines Automatenschachtes in Form einer zweckentsprechenden Warnmeldung rechtzeitig signalisiert wird.

Gleichzeitig ist es eine Aufgabe der Erfindung eine Vorrichtung zur berührungslosen Füllstandsdetektion zu schaffen, welche einfach im Aufbau ist und mit möglichst wenig, hohe Anschaffungskosten aufweisenden Distanzmessgeräten dennoch eine lückenlose Füllstandsdetektion ermöglicht.

Insbesondere soll eine Vorrichtung bereitgestellt werden, welche an bestehenden Kommissionieranlagen leicht und herstellerunabhängig nachgerüstet werden kann und welche mit einem Minimum an beweglichen Einheiten eine größtmögliche Kontrollabdeckung der Automatenschacht-Füllstände realisiert.

### DARSTELLUNG DER ERFINDUNG

Diese Aufgabe wird durch eine Vorrichtung mit den Merkmalen des Anspruchs 1 und ein Verfahren gemäß Anspruch 9 gelöst. Gemäß Anspruch 2 arbeitet das Distanzmessgerät vorzugsweise optisch oder mittels Ultraschall, kann jedoch gegebenenfalls auch mit anderen berührungslosen Techniken arbeiten.

Das Distanzmessgerät ist entlang einer Führungsbahn beliebig verfahrbar und kann an unterschiedliche Messpositionen, welche einzelnen Automatenschächten zugeordnet sind, bewegt werden. Die ermittelten Messwerte können über analoge oder digitale Schnittstellen zur Auswertung an externe Recheneinheiten weitergeleitet werden.

Auf diese Weise können die exakten Füllstände einer Kommissionieranlage effizient überwacht werden. Fehlern, Stockungen oder gar Ausfällen der Kommissionieranlage infolge einer zu spät erkannten Entleerung eines Automatenschachtes wird somit wirksam vorgebeugt. Durch Vorsehung einer separaten Führungsbahn für das Distanzmessgerät kann eine einfache herstellerunabhängige Nachrüstung einer solchen Vorrichtung an handelsüblichen Kommissionieranlagen erfolgen. Aufgrund eines eigenen Wegmesssystems ist die Vorrichtung unabhängig von einer jeweiligen Automatenschachtkonfiguration und kann ohne jeglicher Schnittstelle zum Automatenschacht eingesetzt werden.

Die erfindungsgemäße Schwenkbarkeit garantiert, dass eine exakte Ausrichtung des Messstrahles des Distanzmessgerätes in jeden Automatenschacht möglich ist, unabhängig von dessen Neigung.

Anspruch 3 beschreibt eine Ausführungsvariante der erfindungsgemäßen Vorrichtung bei einer Kommissionieranlage, bei welcher die Automatenschächte in schräg zur Fördereinheit geneigten Automatenschachtreihen angeordnet sind, um eine Fördereinheit mit Stückgut zu beschicken, wobei kennzeichnungsgemäß vorgesehen ist, dass die Führungsbahn für das Distanzmessgerät im Bereich einer imaginären Schnittlinie von durch die Automatenschachtreihen gebildeten Ebenen angeordnet ist.

Die erfindungsgemäße Schwenkbarkeit der Leseeinheit des Distanzmessgerätes ermöglicht dabei die Kontrolle von zwei Automatenschachtreihen mit nur einem Distanzmessgerät. Die Anordnung der Führungsbahn im Bereich der imaginären Schnittlinie ermöglicht eine optimale Detektionsmöglichkeit des Füllstandes.

Anspruch 4 beschreibt eine Ausführungsvariante der erfindungsgemäßen Vorrichtung bei einer Kommissionieranlage, bei welcher die Automatenschächte in Automatenschachtreihen angeordnet sind, wobei kennzeichnungsgemäß vorgesehen ist, dass die Führungsbahn einen geschlossenen, schleifenförmigen Verlauf aufweist, sodass eine kontinuierliche Bewegung des Distanzmessgerätes an der Führungsbahn möglich ist. Auf diese Art und Weise kann der Füllstand mehrerer, hintereinander angeordneter Automatenschächtebzw. Automatenschachtreihen entsprechend detektiert werden. Insbesondere kann der Füllstand sowohl von A-förmig angeordneten Automatenschachtreihen als auch von V-förmig angeordneten Automatenschachtreihen aufgrund des geschlossenen, schleifenförmigen Verlaufs der Führungsbahn problemlos detektiert werden, ohne die Bewegungsrichtung des Distanzmessgerätes umkehren zu müssen.

Gemäß den kennzeichnenden Merkmalen des Anspruchs 5 kann das Distanzmessgerät auch eine Vorrichtung zur optischen Umlenkung von emittierten Messstrahlen aufweisen, vorzugsweise einen Spiegel, wodurch auch der Füllstand von Automatenschächten detektiert werden kann, bei denen der Messstrahl des Distanzmessgerätes beispielsweise aufgrund der speziellen Ausrichtung der Automatenschächte durch die Verschwenkbarkeit der Leseeinheit alleine, nicht in diese gerichtet werden kann oder mit anderen Worten erweitert dieses erfindungsgemäße Merkmal den Erfassungsbereich des Distanzmessgerätes.

Zufolge den kennzeichnenden Merkmalen des Anspruchs 6 ist das Distanzmessgerät entlang eines ihm zugemessenen Streckenabschnittes auf der Führungsbahn, vorzugsweise von einer ersten Endposition in eine zweite Endposition endlos verfahrbar gehalten ist. Der festgelegte Streckenabschnitt kann selbstverständlich die gesamte Länge der Führungsbahn umfassen, oft kann es in der Praxis jedoch der Fall sein, dass für spezifische Kommissionszusammenstellungen lediglich für bestimmte Automatenschächte oder Automatenschachtgruppen eine Füllstandskontrolle erfolgen soll und somit eine Positionierung des Distanzmessgerätes nur an ausgewählten Messpositionen erforderlich ist. Insofern kann einer fördertechnischen Optimierung entsprochen werden.

Gemäß den kennzeichnenden Merkmalen des Anspruchs 7 ist ein mit dem Distanzmessgerät verbundener Computer vorgesehen, welcher der Verknüpfung von erhaltenen Messdaten mit Positionsdaten des Distanzmessgerätes dient. Indem die Position des Distanzmessgerätes über ein Wegmesssystem jederzeit genau registriert wird, kann ein ermittelter Füllstand der Position eines definierten Automatenschachtes exakt zugewiesen und in der Folge numerisch oder graphisch über ein Ausgabegerät dargestellt werden. Selbiger Computer kann auch in den Entnahmeeinheiten integriert sein.

Die kennzeichnenden Merkmale des Anspruchs 8 beschreiben die Vorsehung von mindestens einem Sensor am Distanzmessgerät, welcher während des Verfahrens des Distanzmessgerätes die Wandungen der einzelnen Automatenschächte detektiert. In einer bevorzugten Ausführung wird dazu die Oberkante einer zwei Automatenschächte voneinander trennenden Wandung mittels eines Lichtstrahls detektiert, selbige kann jedoch auch über einen Berührungssensor detektiert werden. Auf diese Weise kann die exakte Schachtbreite und somit die nächste Messposition für das Distanzmessgerät exakt bestimmt werden.

Die Merkmale des Anspruchs 9 richten sich auf ein Verfahren zur berührungslosen Füllstandsdetektion von Automatenschächten, die in unterschiedlich geneigten Automatenschachtreihen angeordnet sind, mit Entnahmeeinheiten bei Kommissionieranlagen mittels eines, vorzugsweise optoelektronischen, Distanzmessgerätes. Das Distanzmessgerät besitzt eine schwenkbare Leseeinheit. Dabei wird ein Distanzmessgerät entlang einer Führungsbahn an einem den Automatenschächten positioniert, um an einer definierten Messposition eine Detektion des Füllstandes des jeweiligen Automatenschachtes durchzuführen. Danach erfolgt vor der Detektion ein Ausrichten der Leseeinheit in einen der Automatenschächte, sodass die Anordnung der Optik bzw. der Leseeinheit des Distanzmessgerätes exakt der Neigung des Automatenschachtes entspricht. Auf diese Weise kann ein Messstrahl des Distanzmessgerätes exakt in einer Normalebene auf das im Automatenschacht eingefüllte Stückgut auftreffen, wobei aufgrund der erfindungsgemäßen Verschwenkbarkeit der Leseeinheit des Distanzmessgerätes auch unterschiedlich geneigte Automatenschächte korrekt detektiert werden können. Anschließend werden die erhaltenen Daten hinsichtlich des Füllstandes mit den Positionsdaten des Distanzmessgerätes, welche von einem Wegmesssystem bereitgestellt werden, verknüpft. Vorzugsweise wird das Distanzmessgerät in der Folge an einem weiteren Automatenschacht positioniert und ausgerichtet und der Messvorgang samt Positionsdatenverknüpfung wiederholt. Auf diese Weise kann der aktuelle Füllstand eines beliebigen Automatenschachtes der Kommissionieranlage observiert werden, um bei bevorstehender Entleerung eines Automatenschachtes geeignete Maßnahmen manueller oder automatisierter Art zur Nachfüllung desselben zu treffen. Auch eine permanente Kontrolle des Entnahmevorgangs ist somit möglich.

Die kennzeichnenden Merkmale des Anspruchs 10 sehen vor, dass das Distanzmessgerät am Ende eines ihm zugemessenen Streckenabschnittes auf der Führungsbahn entgegen seiner bisherigen Bewegungsrichtung entlang des zuvor zurückgelegten Streckenabschnittes zurückbewegt wird. Sodann werden die an den passierten Automatenschächten erhaltenen Messdaten durch erneutes Ausführen des Messvorganges in nunmehr umgekehrter Reihenfolge aktualisiert, wodurch dem Distanzmessgerät ein permanentes Aktivsein in seiner Messtätigkeit erlaubt wird, ohne dass es vor einem erneuten Messdurchlauf in eine Ausgangsposition zurückkehren müsste. Vorzugsweise wird das Distanzmessgerät bzw. ein von diesem ausgesandter Messstrahl nach bezeichneter Änderung der Bewegungsrichtung in eine andere von Automatenschächten gebildete Automatenschachtreihe ausgerichtet als jene zuvor kontrollierte Automatenschachtreihe. Das Distanzmessgerät kann im Falle der Vorsehung einer schleifenförmigen, mehreren Automatenschachtreihen zugeordneten Führungsbahn auch entlang einer weiteren Automatenschachtreihe zurückbewegt werden und seinen Umlauf an der Führungsbahn in einem Endloszirkel fortsetzen.

Zufolge der kennzeichnenden Merkmale des Anspruchs 11 wird der Vorgang des Abfahrens des Streckenabschnittes der Führungsbahn mit anschließendem Aktualisieren der Messdaten kontinuierlich oder in beliebigen Intervallen wiederholt. Auf diese Weise kann der Kommissionierzyklus der Anlage und der Füllstand aller im Einsatz befindlichen Automatenschächte permanent überwacht werden.

Das kennzeichnende Merkmal des Anspruchs 12 sieht vor, dass die erfassten Daten an einen zentralen Mikroprozessor weitergeleitet werden, wo sie entsprechend den kennzeichnenden Merkmalen des Anspruchs 13 nach einstellbaren Parametern ausgewertet und in der Folge auf einem zentralen Monitor dargestellt werden können. Die verknüpften Daten können somit in einer dem Produktionsprozess adäquaten Weise verwertet werden, um eine rechtzeitige Reaktion auf eine drohende Stückgutentleerung in einem Automatenschacht zu ermöglichen.

Die kennzeichnenden Merkmale des Anspruchs 14 erlauben eine Führung des Distanzmessgerätes an beliebigen definierten Streckenabschnitten, in welche die Führungsbahn unterteilt ist. Die Bewegungsrichtung des Distanzmessgerätes kann während des Bewegungszyklus variabel geändert werden. Auf diese Weise kann mannigfaltigsten Kommissionierkonfigurationen entsprochen werden, da solcherart beispielweise nur die für einen Kommissionierauftrag im Einsatz befindlichen oder relevanten Automatenschächte überwacht werden können, ohne dass die gesamte Führungsbahn abgefahren werden müsste. Ebenso kann für bestimmte Automatenschächte oder Automatenschachtgruppen eine Kontrollpriorität programmiert sein, sodass an den ihnen zugeordneten Messpositionen eine Füllstandsdetektion in vermehrter Frequenz gegenüber anderen Automatenschächten erfolgt.

Für den Anwendungsfall von Stückgut mit unbekannten Dimensionen oder ungeordnet in den Automatenschächten liegendem Stückgut wird gemäß dem kennzeichnenden Merkmal des Anspruchs 15 eine Differenz des Füllstandes im Automatenschacht ermittelt, während an der Entnahmeeinheit ein Stückgutabgabevorgang vollführt wird. Das Distanzmessgerät ermittelt dabei im Zeitintervall einer Stückgutabgabe an die Fördereinheit zwei Distanzwerte, nämlich einen Füllstand des Automatenschachtes vor der Stückgutabgabe mittels der Entnahmeeinheit und einen Füllstand desselben Automatenschachtes nach der Stückgutabgabe. Aus der anhand der beiden Distanzwerte ermittelten Differenz des Füllstandes kann schließlich gemäß dem kennzeichnenden Merkmal des Anspruchs 16 mittels einer Recheneinheit die Stückgutgröße und somit der Bestand an Stückgut im jeweiligen Automatenschacht errechnet wird.

Um während der Positionierung des Distanzmessgerätes die nächste Messposition exakt bestimmen zu können, werden die die einzeigen Automatenschächte voneinander trennenden Wandungen zufolge den kennzeichnenden Merkmalen des Anspruchs 17 beim Vorbeibewegen das Distanzmessgerätes von einem Sensor detektiert. Solcherart kann ebenfalls die exakte Automatenschachtbreite errechnet und das Distanzmessgerät hinsichtlich seiner optimalen Messpositionen neu justiert werden.

### KURZE BESCHREIBUNG DER FIGUREN

Die Erfindung wird nun anhand eines Ausführungsbeispiels näher erläutert. Dabei zeigt:
- Fig.1: eine perspektivische Darstellung einer Kommissionieranlage mit erfindungsgemäßer Füllstandsdetektionsvorrichtung
- Fig.2: eine Seitenansicht einer Kommissionieranlage aus Fig.1
- Fig.3: eine schematische Darstellung einer Kommissionieranlage mit erfindungsgemäßer Füllstandsdetektionsvorrichtung an zueinandergeneigten Automatenschachtreihen
- Fig.4: eine schematische Seitenansicht zweier nebeneinander angeordneter Kommissioniersysteme gemäß Fig.3
- Fig.5: eine Draufsicht auf die schematische Ansicht gemäß Fig.4

### WEGE ZUR AUSFÜHRUNG DER ERFINDUNG

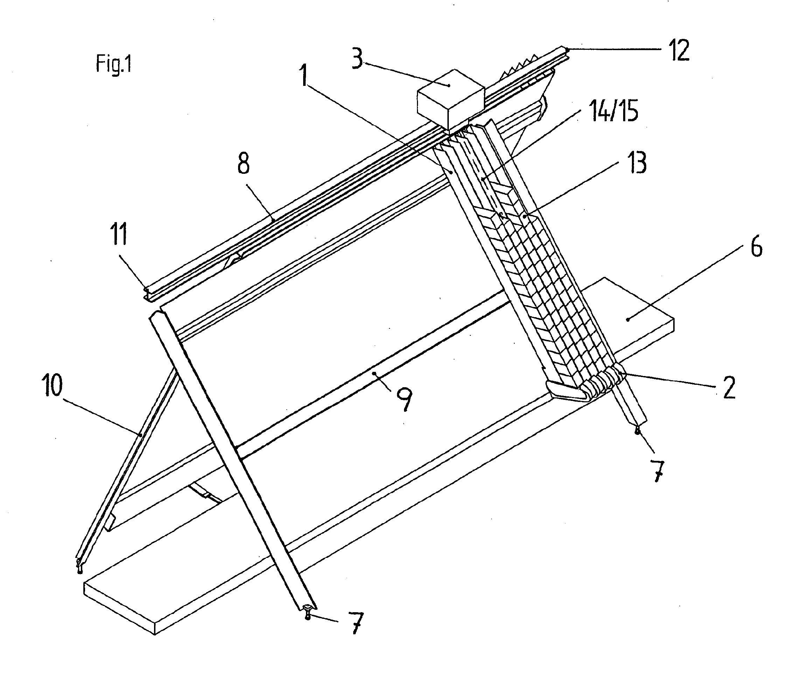

In den Figuren 1,2 und 3 werden Kommissionieranlagen dargestellt, wie sie in unterschiedlichsten Anwendungsgebieten zur Zusammenstellung ausgewählter Stückgutchargen zum Einsatz kommen. Die Kommissionieranlage umfasst dabei in ihrer einfachen Ausführung ein Basisgestell 10, an welchem je nach Auslegung der Anlage beliebig viele Automatenschächte 1 angeordnet sind. In den Automatenschächten 1 ist diverses Stückgut 13 magaziniert, welches in ausgewählter Zusammenstellung und Anzahl auf eine oder mehrere Fördereinheiten 6 abgegeben werden soll, von wo aus dann der Transport zum weiteren Versand oder zur Lagerung erfolgt.

Der Automatenschacht 1 besitzt einen oberen Endbereich 1a und einen unteren Endbereich 1b, welcher eine Entnahmeeinheit 2 zur automatisierten Beschickung der unterhalb des Automatenschachtes 1 angeordneten Fördereinheiten 6 mit Stückgut 13 umfasst. Das Basisgestell 10 weist mehrere Regalverstrebungen 9 auf, welche einer zusätzlichen Abstützung der Automatenschächte 1 dienen und ist mit Standbeinen 7 versehen.

In den Fig.1,2 und 3 ist zwar die in der Praxis übliche Anordnungsart von Automatenschächten 1 an Kommissionieranlagen abgebildet, nämlich deren Anordnung in A-förmig schräg oder V-förmig schräg zur Fördereinheit 6 geneigten Automatenschachtreihen 4 und 5, es ist jedoch ebenso die Anordnung einer einzelnen Automatenschachtreihe 4 in vertikaler oder in beliebig zu einer Fördereinheit 6 geneigten Position möglich. Ebenso ist es für spezielle Erfordernisse denkbar, mehrere Automatenschachtreihen in zueinander parallelen Ebenen hintereinander anzuordnen, welche Stückgut 13 gemeinsam auf eine oder sogar mehrere Fördereinheiten 6 kommissionieren.

An den Automatenschächten 1 ist eine Führungsbahn 8 vorgesehen, entlang welcher ein Distanzmessgerät 3 geführt ist. Die Führungsbahn 8 kann integrierter Bestandteil der Kommissionieranlage sein, ist jedoch vorzugsweise als separater, von der Kommissionieranlage unabhängiger Bauteil ausgeführt, um eine herstellerunabhängige Nachrüstung einer erfindungsgemäßen Vorrichtung an handelsüblichen Kommissionieranlagen zu ermöglichen.

Das Distanzmessgerät 3 ist an unterschiedlichen Automatenschächten 1 zugeordneten Messpositionen entlang der Führungsbahn 8 verfahrbar und weist erfindungsgemäß eine in eine Ebene der Automatenschächte 1 schwenkbare Leseeinheit auf. In einer bevorzugten Ausführungsvariante der Erfindung Arbeitet das Distanzmessgerät mittels optischer Abtastung oder Ultraschall, wobei beispielsweise nach dem Prinzip der gepulsten Lichtlaufzeitmessung Distanzen innerhalb der Automatenschächte 1 schnell und millimetergenau ermittelt werden können. Mit den Pfeilen 14 und 15 ist hierbei die Richtung der vom Distanzmessgerät 3 ausgesandten Messstrahlen bezeichnet.

Die Führungsbahn 8 kann in definierte Streckenabschnitte unterteilt sein und weist vorzugsweise eine erste Endposition 11 und eine zweite Endposition 12 auf, zwischen denen die translatorische Bewegung des Distanzmessgerätes 3 erfolgt. Im regulären Falle umfasst der festgelegte Streckenabschnitt die gesamte Länge der Führungsbahn 8, für den Fall von spezifischen Kommissionszusammenstellungen kann jedoch eine Positionierung des Distanzmessgerätes 3 nur an ausgewählten Automatenschachtgruppen und somit an einer beschränkten Anzahl an Messpositionen erforderlich sein und die Streckenabschnittsdefinition entsprechend adaptiert werden.

Aufgrund eines eigenen Wegmesssystems ist die erfindungsgemäße Vorrichtung unabhängig von einer jeweiligen Automatenschachtkonfiguration. Da sie keine Schnittstelle zu den Automatenschächten 1 besitzt, sondern übergeordnet arbeitet, kann sie auf flexible Weise an Kommissionieranlagen aller Art, unabhängig von deren Hersteller, adaptiert werden.

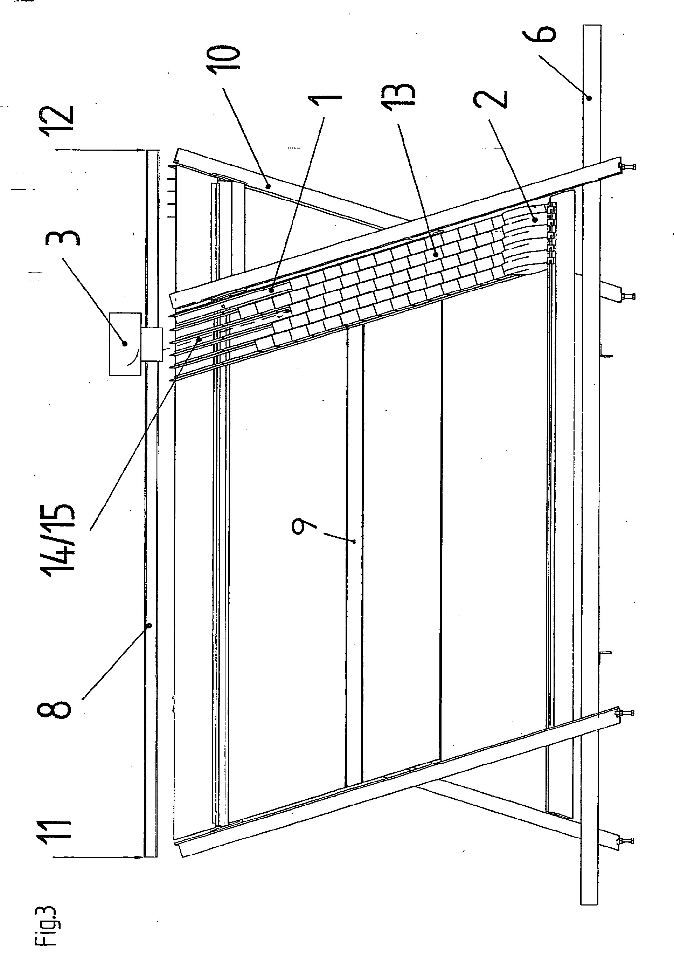

In einer bevorzugten Ausführungsform besitzt die Führungsbahn 8 einen linearen Verlauf, wobei das Distanzmessgerät 3 entlang dieses Verlaufes kontinuierlich von einer ersten Endposition 11 in eine zweite Endposition 12 auf- und abfährt, die Führungsbahn 8 kann jedoch gegebenenfalls, speziell im Anwendungsfalle einer wie in Fig.3 dargestellten Anordnung von zwei V-förmig auf eine einzige Fördereinheit 6 zulaufenden Automatenschachtreihen 4,5, auch einen schleifenförmigen Verlauf bzw. schleifenförmige Streckenabschnitte, welche lineare Streckenabschnitte miteinander verbinden, aufweisen. Letztere Ausführungsvariante mit einem kreis- bzw. schleifenförmigen Verlauf der Führungsbahn 8 ermöglicht es auch bei einer Ausführungsvariante wie in Fig.3 offenbart, beide Automatenschachtreihen 4,5 mittels nur einem Distanzmessgerät 3 zu kontrollieren. Selbstverständlich ist jedoch auch in solcher Anordnung die Vorsehung von zwei separaten, an den jeweiligen Automatenschachtreihen 4,5 angeordneten Führungsbahnen 8 samt Distanzmessgeräten 3 möglich.

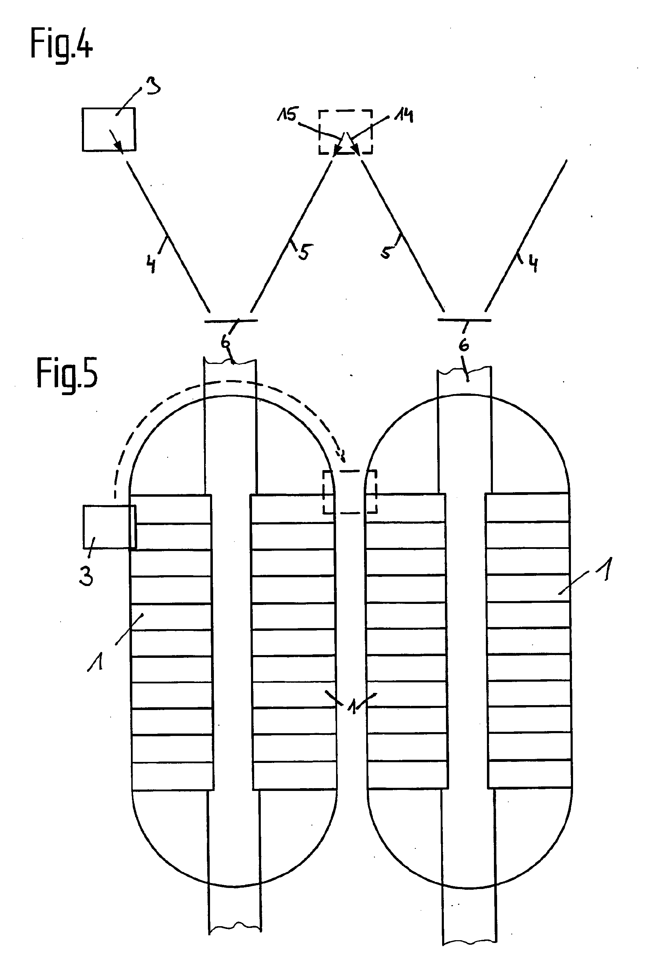

Fig.4 und Fig.5 zeigen mehrere nebeneinandergereihte V-förmig auf eine dazwischen angeordnete Fördereinheit 6 zulaufende Automatenschachtreihen 4,5 wie in Fig.3 dargestellt. Aufgrund der speziellen Anordnung ergibt sich dabei, dass trotz V-förmiger Anordnung der Automatenschachtreihen 4,5 einer Einheit zwei aneinandergrenzende Automatenschachtreihen 5 einander jeweils benachbarter Einheiten eine imaginäre Schnittlinie aufweisen und daher mit einem einzigen Distanzmessgerät mit schwenkbarer Leseeinheit beide Automatenschachtreihen 5 detektieren kann.

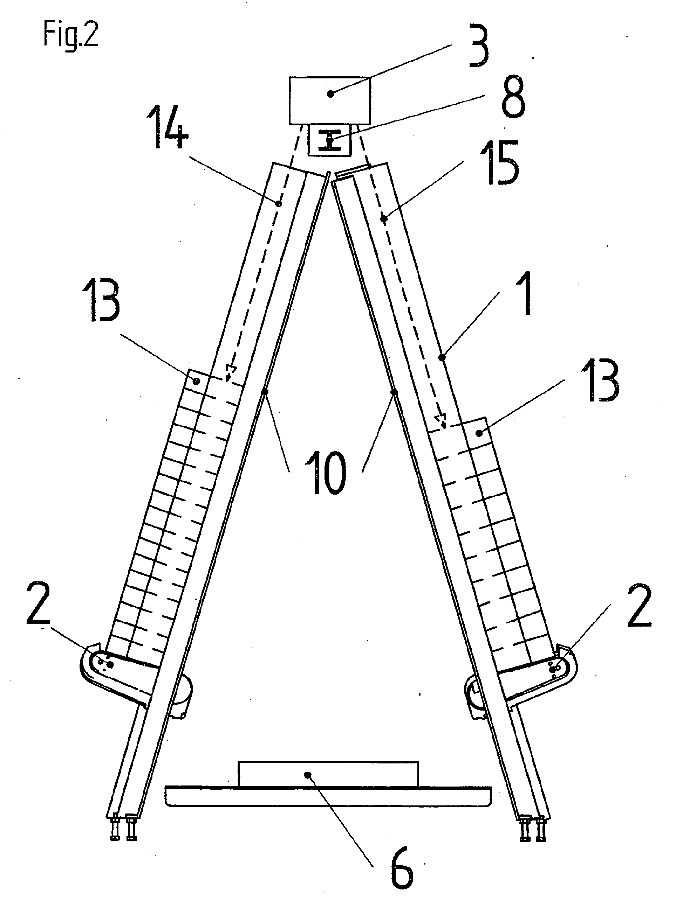

In einer in Fig.1 bzw. 2 dargestellten Ausführungsvariante sind zwei Automatenschachtreihen 1 zur Beschickung von einer oder mehreren Fördereinheiten 6 A-förmig zueinandergeneigt angeordnet. In solcher Anordnung ist die Führungsbahn 8 für das Distanzmessgerät 3 im Bereich einer imaginären Schnittlinie von durch die Automatenschachtreihen 4,5 gebildeten Ebenen angeordnet.

Dabei stellt der Pfeil 14 den Messstrahl des Distanzmessgerätes 3 während eines ersten Abfahrens der Führungsbahn 8 dar und der Pfeil 15 den Messstrahl während eines darauffolgenden Zurückfahrens entgegen der vorhergehenden Bewegungsrichtung.

Die schwenkbare Leseeinheit ermöglicht auch hier das exakte Ausrichten des Messstrahls in die jeweiligen Automatenschächte.

Die Kombination der schwenkbaren Leseeinheit mit einer Vorrichtung zur optischen Umlenkung von emittierten Messstrahlen kann dabei zur Erweiterung des Erfassungsbereichs des Distanzmessgerätes dienen. Dabei können Spiegel oder andere reflektierende oder teildurchlässige Medien, welche mit einem Stellantrieb in eine gewünschte Position bringbar sind, eingesetzt werden.

Der Antrieb des Distanzmessgerätes 3 kann in jedem Fall beliebig gesteuert werden. Vorzugsweise ist ein unterbrechungsfreier, kontinuierlicher und stetiger Bewegungsumlauf des Distanzmessgerätes 3 an der Führungsbahn 8 vorgesehen, sodass die Kontrollfunktion quasi in einer Endlosschleife vollführt wird, jedoch kann es die Beobachtung eines konkreten Prozessdetails während des Kommissioniervorganges auch notwendig machen, dass das Distanzmessgerätes 3 in seiner translatorischen Bewegung für ein bestimmtes Zeitintervall an einer Messposition innehält oder in willkürlicher, aktuell gesteuerter oder programmierter Bewegungsrichtung an der Führungsbahn 8 verfahren wird.

Zu seinem Einsatz wird das Distanzmessgerät 3 an der Führungsbahn 8 an einem Automatenschacht 1 positioniert, um an einer definierten Messposition eine Detektion des Füllstandes des jeweiligen Automatenschachtes 1 durchzuführen. Anschließend werden die erhaltenen Daten betreffend den Füllstand mit den Positionsdaten des Distanzmessgerätes 3, welche beispielsweise von einem Wegmesssystem bereitgestellt werden, verknüpft. In der Folge wird das Distanzmessgerät 3 an einem weiteren Automatenschacht 1 positioniert und der Messvorgang samt Positionsdatenverknüpfung wiederholt.

Vorzugsweise wird das Distanzmessgerät bzw. ein von diesem ausgesandter Messstrahl nach Abfahren einer Automatenschachtreihe 4,5 in eine andere Automatenschachtreihe 4,5 ausgerichtet und eine Aktualisierung der Füllstände der gegenüberliegenden Automatenschachtreihe 4,5 durchgeführt.

Die ermittelten Messwerte können über analoge oder digitale Standardschnittstellen an externe Rechnereinheiten weitergeleitet werden, wo sie ausgewertet werden, um die Füllstände der einzelnen Automatenschächte 1 der Kommissionieranlage effizient zu überwachen. Indem die Position des Distanzmessgerätes 3 über ein Wegmesssystem jederzeit genau registriert wird, kann ein ermittelter Füllstand der Position eines definierten Automatenschachtes 1 exakt zugewiesen werden. Die erhaltenen Messdaten hinsichtlich des Füllstandes eines definierten Automatenschachtes 1 werden mit den Positionsdaten des Distanzmessgerätes 3 computermäßig verknüpft und in der Folge über ein Ausgabegerät, vorzugsweise einen zentralen Monitor, nach entsprechend dem Produktionsprozess eingestellten Parametern aufbereitet dargestellt.

Der aktuelle Füllstand der Automatenschächte 1 kann also jederzeit akkurat auf einem Bildschirm mitverfolgt werden. Bei zur Neige gehendem Stückgut in einem Automatenschacht 1 kann eine entsprechende Warnmeldung in Form eines optischen oder akustischen Signals gesetzt werden. Der für einen jeweiligen Automatenschacht 1 bzw. für eine bestimmte Stückgutart spezifische Füllpegelstand, bei dem eine Warnmeldung initiiert wird, kann parametrisch variabel eingestellt werden.

Vorzugsweise vorgesehen ist weiters die Anordnung von mindestens einem Sensor am Distanzmessgerät 3, welcher während des Verfahrens des Distanzmessgerätes 3 die Wandungen der einzelnen Automatenschächte 1 detektiert. In einer bevorzugten Ausführung wird dazu die Oberkante einer zwei Automatenschächte 1 voneinander trennenden Wandung mittels eines Lichtstrahls detektiert, selbige kann jedoch auch über einen Berührungssensor detektiert werden. Auf diese Weise kann die exakte Schachtbreite und somit die nächste Messposition für das Distanzmessgerät 3 exakt bestimmt werden.

Zwar werden mittels der beschriebenen Kommissionieranlage vorwiegend regelmäßig verpackte und geschlichtete Waren auf die Fördereineheiten 6 kommissioniert, jedoch ist auch ein ungeordnetes Einfüllen von Stückgut 13 in die Automatenschächte 1 möglich, beispielsweise bei rundem Stückgut. In solchem Anwendungsfalle wird eine Differenz des Füllstandes im Automatenschacht 1 ermittelt, während an der Entnahmeeinheit 2 ein Stückgutabgabevorgang stattfindet. Das Distanzmessgerät 3 ermittelt während der Stückgutabgabe an die Fördereinheit 6 zwei Distanzwerte, nämlich einen Füllstand des Automatenschachtes 1 vor der Stückgutabgabe mittels der Entnahmeeinheit 2 und einen Füllstand desselben Automatenschachtes 1 nach der Stückgutabgabe. Die resultierende Differenz des Füllstandes erlaubt schließlich eine computermäßige Errechnung der Stückgutgröße und somit des Bestandes an Stückgut 13 im jeweiligen Automatenschacht 1.

Die erfindungsgemäße Vorrichtung ist auf größtmögliche Effizienz bei gleichzeitigem sparsamen Bauteilaufwand ausgelegt und trachtet daher, wie im obigen Ausführungsbeispiel beschrieben, danach, mit möglichst nur einem einzigen Distanzmessgerät 3 eine Kontrollabdeckung sämtlicher Automatenschächte 1 zu erzielen. Jedoch kann es aus jeweiligen konstruktiven Notwendigkeiten und zum Zwecke einer Erhöhung der Kontroll- und Aktualisierungsfrequenz sowie als Sicherheitsmaßnahme für den Fall eines Defektes des Distanzmessgerätes 3 und einer damit einhergehenden Verzögerung im Kommissionierprozess, wie sie zumeist nicht in Kauf genommen werden kann, sinnvoll sein, weitere Distanzmessgeräte 3 auf der Führungsbahn 8 vorzusehen bzw. ein Distanzmessgerät 3 mit mehreren Leseeinheiten auszustatten.

## Patentansprüche

1. Vorrichtung mit einem Distanzmessgerät (3) zur berührungslosen Füllstandsdetektion von mit Entnahmeeinheiten (2) versehenen Autoxnatenschächten (1) einer Kommissionieranlage, wobei die Entnahmeeinheiten (2) Stückgut (13) an eine oder mehrere Fördereinheiten (6) abgeben, **dadurch gekennzeichnet, dass** die Vorrichtung eine Führungsbahn (8) aufweist und dass das Distanzmessgerät (3) eine in eine Ebene eines jeden Automatenschachtes (4,5) schwenkbare Leseeinheit besitzt, wobei das Distanzmessgerät (3) an unterschiedlichen Automatenschächten (1) zugeordneten Messpositionen entlang der Führungsbahn (8) verfahrbar ist, wobei die Automatenschächte (1) in unterschiedlich geneigten Automatenschachtreihen (4, 5) angeordnet sind, deren Ebenen sich entlang einer imaginären Schnittlinie schneiden und wobei die Führungsbahn (8) im Bereich der imaginären Schnittlinie vorzusehen ist.

2. Vorrichtung nach Anspruch 1, **dadurch gekennzeichnet, dass** das Distanzmessgerät (3) mittels optischer Abtastung oder Ultraschall arbeitet.

3. Vorrichtung nach Anspruch 1 oder 2, wobei die Automatenschächte (1) in schräg zur Fördereinheit (6) geneigten Automatensehachtreitien (4,5) angeordnet sind, **dadurch gekennzeichnet, dass** die Führungsbahn (8) für das Distanzmessgerät (3) im Bereich einer imaginären Schnittlinie von durch die Automatenschachtreihen (4,5) gebildeten Ebenen angeordnet ist.

4. Vorrichtung nach Anspruch 1 oder 2, wobei die Automatenschäthte (1) in Automatenschachtreihen (4,5) angeordnet sind, **dadurch gekennzeichnet, dass** die Führungsbahn (8) für das Distanzmessgerät (3) entlang eines oberen Endbereichs (1a) der Automatenschachtreihen (4,5) herläuft, wobei die Führungsbahn (8) einen geschlossenen, schleifenförmigen Verlauf aufweist, sodass eine kontinuierliche Bewegung des Distanzmessgerätes (3) an der Führungsbahn (8) möglich ist.

5. Vorrichtung nach einem der Ansprüche 1 bis 4, **dadurch gekennzeichnet, dass** das Distanzmessgerät (3) eine Vorrichtung zur optischen Umlenkung von emittierten Messstrahlen (14,15), vorzugsweise einen Spiegel, besitzt.

6. Vorrichtung nach einem der Ansprüche 1 bis 5, **dadurch gekennzeichnet, dass** das Distanzmessgerät (3) entlang eines ihm zugemessenen Streckenabschnittes auf der Führungsbahn (8), vorzugsweise von einer ersten Endposition (11) in eine zweite Endposition (12) endlos verfahrbar gehalten ist.

7. Vorrichtung nach einem der Ansprüche 1 bis 6, **dadurch gekennzeichnet, dass** ein Computer vorgesehen ist, der mit dem Distanzmessgerät (3) verbunden ist und der zur Verknüpfung von erhaltenen Messdaten mit Positionsdaten des Distanzmessgerätes (3) dient.

8. Vorrichtung nach einem der Ansprüche 1 bis 7, **dadurch gekennzeichnet, dass** am Distanzmessgerät (3) mindestens ein Sensor vorgesehen ist, der während des Verfahrens des Distanzmessgerätes (3) Wandungen detektiert, welche die einzelnen Automatenschächte (1) voneinander trennen.

9. Verfahren zur berührungslosen Füllstandsdetektion von Automatenschächten (1), die in unterschiedlich geneigten Automatenschachtreihen (4,5) angeordnet sind, mit Entnahmeeinheiten (2) bei Kommissionieranlagen mittels eines, vorzugsweise optoelektronischen, Distanzmessgerätes (3), wobei das Distanzmessgerät eine schwenkbare Leseeinheit besitzt, wobei das Verfahren folgende Schritte umfasst:
- Positionieren des Distanzmessgerätes (3) an einer Messposition entlang einer Führungsbahn (8) die an den Automatenschächten (1) vorgesehen ist;
- Ausrichten der Leseeinheit in einen der Automatenschächte (1);
- Durchführen einer Detektion des Füllstandes einen Automatenschachtes (1);
- Verknüpfung der erhaltenen Daten mit den Positionsdaten des Distanzmessgerätes (3); und
- vorzugsweises Positionieren des Distanzmessgerätes (3) an einem weiteren Automatenschacht (1) und Wiederholung der vorhergehenden Schritte.

10. Verfahren nach Anspruch 9, **dadurch gekennzeichnet, dass** das Distanzmessgerät (3) am Ende eines ihm zugemessenen Streckenabschnittes auf der Führungsbahn (8) entgegen seiner bisherigen Bewegungsrichtung entlang des zuvor zurückgelegten Streckenabschnittes zurückbewegt wird und die an den passierten Automatenschächten (1) erhaltenen Messdaten durch erneutes Ausführen des Messvorganges in nunmehr umgekehrter Reihenfolge aktualisiert werden.

11. Verfahren nach Anspruch 10, **dadurch gekennzeichnet, dass** der Vorgang des Abfahrens des Streckenabschnittes der Führungsbahn (8) mit anschließendem Aktualisieren der Messdaten kontinuierlich oder in beliebigen Intervallen wiederholt wird.

12. Verfahren nach einem der Ansprüche 9 bis 11, **dadurch gekennzeichnet, dass** die erfassten Daten an einen zentralen Mikroprozessor weitergeleitet werden.

13. Verfahren nach Anspruch 12, **dadurch gekennzeichnet, dass** die erfassten Daten nach einstellbaren Parametern ausgewertet und auf einem zentralen Monitor dargestellt werden.

14. Verfahren nach einem der Ansprüche 9 bis 13, **dadurch gekennzeichnet, dass** das Distanzmessgerät (3) entlang definierter Streckenabschnitte der Führungsbahn (8) in wechselnder Bewegungsrichtung bewegt wird.

15. Verfahren nach einem der Ansprüche 9 bis 14, **dadurch gekennzeichnet, dass** im Falle von ungeordnet in den Automatenschächten (1) liegendem Stückgut (13) mittels des Distanzmessgerätes (3) eine Differenz des Füllstandes im Automatenschacht (1) während der Durchführung eines Stückgutabgabevorganges an der Entnahmeeinheit (2) ermittelt wird.

16. Verfahren nach Anspruch 15, **dadurch gekennzeichnet, dass** anhand der ermittelten Differenz des Füllstandes im Automatenschacht (1) während des Stückgutabgabevorganges mittels einer Recheneinheit die Stückgutgröße und somit der Bestand an Stückgut im jeweiligen Automatenschacht (1) errechnet wird.

17. Verfahren nach einem der Ansprüche 9 bis 16, **dadurch gekennzeichnet, dass** die die einzelnen Automatenschächte (1) voneinander trennenden Wandungen beim Vorbeibewegen das Distanzmessgerätes (3) von einem Sensor detektiert werden, um die nächste Messposition exakt bestimmen zu können.

## Claims

1. An apparatus comprising a distance-measuring device (3) for a contactless detection of filling levels of automaton shafts (1), which are provided with removal units (2), of an order-picking system, wherein the removal units (2) deliver piece goods (13) to one or more conveyor units (6), **characterized in that** the apparatus comprises a guideway (8), and the distance-measuring device (3) has a reader unit which can be pivoted to a plane of each of the automaton shafts (4, 5), wherein the distance-measuring device (3) can travel to measuring positions, assigned to different automaton shafts (1), along the guideway (8), wherein the automaton shafts (1) are arranged in differently inclined automaton-shaft rows (4, 5), planes of which intersect each other along an imaginary intersection line, and wherein the guideway (8) is to be provided in a region of the imaginary intersection line.

2. The apparatus of claim 1, **characterized in that** the distance-measuring device (3) is operated by means of optical scanning or use of supersonic.

3. The apparatus of claim 1 or 2, wherein the automaton shafts (1) are arranged in automaton-shaft rows (4, 5) being inclined obliquely relative to the conveyor unit (6), **characterized in that** the distance-measuring device (3) guideway (8) is arranged in a region of the imaginary intersection line of planes being formed by the automaton-shaft rows (4, 5).

4. The apparatus of claim 1 or 2, wherein the automaton shafts (1) are arranged along automaton-shaft rows (4, 5), **characterized in that** the guideway (8) for the distance-measuring device (3) extends along an upper end region (la) of the automaton-shaft rows (4, 5), wherein the guideway (8) has a closed loop-like course, so that a continuous movement of the distance-measuring device (3) along the guideway (8) is possible.

5. The apparatus of any of the claims 1 to 4, **characterized in that** the distance-measuring device (3) has a device for optically deflecting emitted measuring beams (14, 15), preferably a mirror.

6. The apparatus of any of the claims 1 to 5, **characterized in that** the distance-measuring device (3) is supported in an endlessly movable manner along a track section, associated therewith, on the guideway (8), preferably from a first end position (11) to a second end position (12).

7. The apparatus of any of the claims 1 to 6, **characterized in that** a computer is provided, which is connected to the distance-measuring device (3) and serves for associating obtained measuring data with position data of the distance-measuring device (3).

8. The apparatus of any of the claims 1 to 7, **characterized in that** the distance-measuring device (3) is provided with at least one sensor detecting walls during the movement of the distance-measuring device (3), the walls separating the individual automaton shafts (1) from each other.

9. A method for contactless detection of filling levels of automaton shafts (1), which are arranged in differently inclined automaton-shaft rows (4, 5), including removal units (2), with order-picking systems by means of a, preferably optoelectronic, distance-measuring device (3), wherein the distance-measuring device has a pivotable reader unit, wherein the method comprises the following steps:
- positioning the distance-measuring device (3) at a measuring position along a guideway (8) which is provided at the automaton shafts (1);
- orientating the reader unit into one of the automaton shafts (1);
- detecting a filling level of the one of the automaton shafts (1);
- associating the obtained data with the position data of the distance-measuring device (3); and
- preferably positioning the distance-measuring device (3) at another automaton shaft (1), and repeating the preceding steps.

10. The method of claim 9, **characterized in that** the distance-measuring device (3) is moved back at an end of a track section, assigned thereto, on the guideway (8), oppositely to its previous movement direction, along the before-passed track section, and the measuring data obtained at the passed-by automaton shafts (1) are updated by once again carrying out the measuring process in an inverted sequence.

11. The method of claim 10, **characterized in that** the process of travelling along the track section of the guideway (8), including a subsequent update of the measuring data, is repeated continuously or at arbitrary intervals.

12. The method of any of the claims 9 to 11, **characterized in that** the detected data is forwarded to a central microprocessor.

13. The method of claim 12, **characterized in that** the detected data is evaluated in accordance with adjustable parameters, and depicted on a central display.

14. The method of any of the claims 9 to 13, **characterized in that** the distance-measuring device (3) is moved along defined track sections of the guideway (8) in alternating movement directions.

15. The method of any of the claims 9 to 14, **characterized in that** a difference of the filling level in the automaton shaft (1) is determined during the performance of a piece-good dispensing process at the removal unit (2) by means of the distance-measuring device (3), if the piece goods (13) are provided in the automaton shafts (1) in a non-sequence manner.

16. The method of claim 15, **characterized in that,** based on the determined difference of the filling level in the automaton shaft (1), the piece-good size, and thus the stock of piece goods in the respective automaton shaft, is computed by means of a computing unit during the process of dispensing the piece good.

17. The method of any of the claims 9 to 16, **characterized in that** the walls separating the individual automaton shafts (1) from each other are detected by a sensor when the distance-measuring device (3) passes, in order to allow the determination of the following measuring position in an accurate manner.

## Revendications

1. Dispositif comportant un appareil de mesure de distance (3) pour détecter sans contact un niveau de remplissage de puits de distribution automatique (1) munis d'unités de prélèvement (2) d'une installation de préparation de commande, dans lequel les unités de prélèvement (2) distribuent des marchandises de détail (13) à une ou plusieurs unités de transport (6), **caractérisé en ce que** le dispositif comporte une piste de guidage (8) et que l'appareil de mesure de distance (3) possède une unité de lecture pouvant pivoter dans un plan d'un puits de distribution automatique (4, 5) respectif, dans lequel l'appareil de mesure de distance (3) peut se déplacer dans des positions de mesure associées à différents puits de distribution automatique (1) le long de la piste de guidage (8), dans lequel les puits de distribution automatique (1) sont agencés en rangées de puits de distribution automatique (4, 5) différemment inclinées, dont les plans se coupent le long d'une ligne d'intersection fictive et dans lequel la piste de guidage (8) doit être prévue dans la zone de la ligne d'intersection fictive.

2. Dispositif selon la revendication 1, **caractérisé en ce que** l'appareil de mesure de distance (3) fonctionne par un balayage optique ou par ultrasons.

3. Dispositif selon la revendication 1 ou 2, dans lequel les puits de distribution automatique (1) sont agencés en rangées de puits de distribution automatique (4, 5) inclinées de manière oblique par rapport à l'unité de transport (6), **caractérisé en ce que** la piste de guidage (8) pour l'appareil de mesure de distance (3) est agencée dans la zone d'une ligne d'intersection fictive des plans formés par les rangées de puits de distribution automatique (4, 5).

4. Dispositif selon la revendication 1 ou 2, dans lequel les puits de distribution automatique (1) sont agencés en rangées de puits de distribution automatique (4, 5), **caractérisé en ce que** la piste de guidage (8) pour l'appareil de mesure de distance (3) s'étend le long d'une zone d'extrémité supérieure (la) des rangées de puits de distribution automatique (4, 5), dans lequel la piste de guidage (8) présente un tracé fermé en forme de boucle, de telle sorte qu'un déplacement continu de l'appareil de mesure de distance (3) est possible sur la piste de guidage (8).

5. Dispositif selon l'une quelconque des revendications 1 à 4, **caractérisé en ce que** l'appareil de mesure de distance (3) possède un dispositif pour renvoyer optiquement des faisceaux de mesure émis (14, 15), de préférence un miroir.

6. Dispositif selon l'une quelconque des revendications 1 à 5, **caractérisé en ce que** l'appareil de mesure de distance (3) est maintenu de manière à pouvoir se déplacer à l'infini le long d'un tronçon de piste attribué à celui-ci sur la piste de guidage (8), de préférence d'une première position d'extrémité (11) à une seconde position d'extrémité (12).

7. Dispositif selon l'une quelconque des revendications 1 à 6, **caractérisé en ce qu'**un ordinateur est prévu, lequel est relié à l'appareil de mesure de distance (3) et lequel sert à associer des données de mesure reçues à des données de position de l'appareil de mesure de distance (3).

8. Dispositif selon l'une quelconque des revendications 1 à 7, **caractérisé en ce qu'**au moins un capteur est prévu sur l'appareil de mesure de distance (3), ledit capteur détectant des parois pendant le déplacement de l'appareil de mesure de distance (3), lesdites parois séparant les puits de distribution automatique individuels
(1) les uns des autres.

9. Procédé pour détecter sans contact un niveau de remplissage de puits de distribution automatique (1) qui sont agencés en rangées de puits de distribution automatique (4, 5) différemment inclinées, munis d'unités de prélèvement (2) d'installations de préparation de commandes, au moyen d'un appareil de mesure de distance (3), de préférence optoélectronique, dans lequel l'appareil de mesure de distance possède une unité de lecture pouvant pivoter, le procédé comportant les étapes suivantes consistant à :
- positionner l'appareil de mesure de distance (3) à une position de mesure le long d'une piste de guidage (8) qui est prévue sur les puits de distribution automatique (1),
- orienter l'unité de lecture dans l'un des puits de distribution automatique (1),
- effectuer une détection du niveau de remplissage d'un puits de distribution automatique (1),
- associer les données obtenues aux données de position de l'appareil de mesure de distance (3), et
- positionner de préférence l'appareil de mesure de distance (3) sur un autre puits de distribution automatique (1) et répéter les étapes précédentes.

10. Procédé selon la revendication 9, **caractérisé en ce que** l'appareil de mesure de distance (3) est ramené à la fin d'un tronçon de piste affecté à celui-ci sur la piste de guidage (8) à l'opposé de sa direction de déplacement précédente le long du tronçon de piste parcouru auparavant, et les données de mesure obtenues sur les puits de distribution automatique (1) franchis sont mises à jour en exécutant de nouveau le processus de mesure dans l'ordre inverse.

11. Procédé selon la revendication 10, **caractérisé en ce que** le processus du parcours du tronçon de piste de la piste de guidage (8) avec mise à jour subséquente des données de mesure est répété de manière continue ou à des intervalles arbitraires.

12. Procédé selon l'une quelconque des revendications 9 à 11, **caractérisé en ce que** les données détectées sont transmises à un microprocesseur central.

13. Procédé selon la revendication 12, **caractérisé en ce que** les données détectées sont évaluées en fonction de paramètres réglables et sont représentées sur un moniteur central.

14. Procédé selon l'une quelconque des revendications 9 à 13, **caractérisé en ce que** l'appareil de mesure de distance (3) est déplacé le long de tronçons de piste définis de la piste de guidage (8) dans une direction de déplacement variable.

15. Procédé selon l'une quelconque des revendications 9 à 14, **caractérisé en ce qu'**en cas de marchandises de détail (13) en état désordonné dans les puits de distribution automatique (1), une différence du niveau de remplissage dans le puits de distribution automatique (1) est déterminée au moyen de l'appareil de mesure de distance (3) pendant l'exécution d'un processus de distribution de marchandises de détail à l'unité de prélèvement (2).

16. Procédé selon la revendication 15, **caractérisé en ce que** la taille des marchandises de détail, et donc le stock de marchandises de détail dans le puits de distribution automatique (1) respectif, est calculée sur la base de la différence déterminée du niveau de remplissage dans le puits de distribution automatique (1) lors du processus de distribution de marchandises de détail, au moyen d'une unité de calcul.

17. Procédé selon l'une quelconque des revendications 9 à 16, **caractérisé en ce que** les parois séparant les puits de distribution automatique individuels (1) les uns des autres sont détectées par un capteur lors du passage de l'appareil de mesure de distance (3) afin de pouvoir déterminer précisément la position de mesure suivante.
